# EUROPÄISCHE PATENTANMELDUNG

(11) **EP 3 576 236 A1**
(43) Veröffentlichungstag der Anmeldung: **04.12.2019**
(21) Anmeldenummer: 18175021.7
(22) Anmeldetag: 30.05.2018
(51) Int. Cl.: H02G 7/00, H01B 17/00, H02G 1/02

(54) **VERSCHMUTZUNGSSCHUTZ FÜR HOCHSPANNUNGSISOLATOREN**

(71) Anmelder: Bayernwerk AG, 93049 Regensburg (DE)
(72) Erfinder: TAUBER, Wolfgang, 92676 Eschenbach (DE)
(74) Vertreter: Glawe, Delfs, Moll

(57) **Zusammenfassung**

Die Erfindung betrifft eine Verschmutzungsschutzvorrichtung (10) für Hochspannungsisolatoren (3) sowie eine Anordnung aus Verschmutzungsschutzvorrichtung (10) und Hochspannungsisolator (10) .

Die Verschmutzungsschutzvorrichtung (10) ist zur Befestigung an der Isolatorkappe (5) des Hochspannungsisolators (3) ausgebildet und hat einen Schutzschirm (11), der sich radial um eine Durchführungsöffnung (12) für das Anschlusselement (7) der Isolatorkappe (5) erstreckt, wobei die Durchführungsöffnung (12) auf der einen Seite des Schutzschirms (11) von einen Befestigungsbereich (23) zur formschlüssigen Verbindung mit der Isolatorkappe (5) umgeben ist. Auf der anderen Seite des Schutzschirms (11) sind zwei Augen (14) zum Durchstecken eines Laschenelementes (30) und ein Laschenelement (30) vorgesehen, wobei die Augen (14) derart angeordnet sind, dass sich das Laschenelement (30) nach Durchstecken durch die beiden (14) Augen über die Durchführungsöffnung (12) erstreckt.

Die Anordnung umfasst einen Hochspannungsisolator (3) mit Isolatorkappe (5) und eine an der Isolatorkappe (5) formschlüssig angeordnete erfindungsgemäße Verschmutzungsschutzvorrichtung (10) .

## Beschreibung

Die Erfindung betrifft eine Verschmutzungsschutzvorrichtung für Hochspannungsisolatoren sowie eine Anordnung aus Verschmutzungsschutzvorrichtung und Hochspannungsisolator.

Überirdische Hochspannunngsleitungen sind regelmäßig über Hochspannungsmasten geführt. Um die Hochspannungsmasten elektrisch von den Hochspannungsleitungen zu trennen, sind an den Aufhängungspunkten zwischen den Hochspannungsleitungen und den Hochspannungsmasten jeweils Hochspannungsisolatoren vorgesehen. Dabei kommen häufig Langstabisolatoren zum Einsatz, die an Traversen des Hochspannungsmastes aufgehängt sind und an deren freien Ende die Hochspannungsleitung befestigt ist.

Auch wenn die Hochspannungsisolatoren grundsätzlich ausreichend für die gewünschte Isolation zwischen Hochspannungsleitung und Hochspannungsmast ausgelegt sind, kommt es immer wieder zu sog. Erdschlüssen und Erdkurzschlüssen, bei denen ein Hochspannungsisolator überbrückt wird und die daran befestigte Hochspannungsleitung über den Hochspannungsmast mit der Erde verbunden wird. Je nach Sternpunktbehandlung des Hochspannungsnetzes und der Dauer der Netzstörung können diese einpoligen Fehler massive Auswirkungen auf nachgelagerte Netze und angeschlossene Verbraucher haben, weshalb es im Stand der Technik Bestrebungen gibt, diese Störungen zu reduzieren und die Betriebssicherheit zu erhöhen.

Da als eine Ursache für das Auftreten von Erdschlüssen und Erdkurzschlüssen auf den Hochspannungsisolatoren unmittelbar auftreffender oder abgelagerter Vogeldreck - insbesondere in Kombination mit Feuchtigkeit - identifiziert wurde, schlägt bspw. die technische Spezifikation der Internationalen Elektrotechnischen Kommission IEC/TS 60815-1:200 - Auswahl und Bemessung von Hochspannungsisolatoren für die Anwendung unter Verschmutzungsbedingungen - Teil 1: Begriffe, Informationen und allgemeine Grundlagen vor "... Abschreckungsvorrichtungen oder Vogelstangen anzubringen, die an die örtliche Fauna und an die Konstruktion angepasst sind", um zu vermeiden, dass sich Vögel oberhalb der Hochspannungsisolatoren auf den Hochspannungsmasten niederlassen, ihr Geschäft verrichten und so die Hochspannungsisolatoren verschmutzen. Es hat sich jedoch gezeigt, dass durch entsprechende Vorrichtungen Erdschlüsse und Erdkurzschlüsse nur in überschaubaren Umfang reduziert werden können.

Auch sind Schutzvorrichtungen bekannt, bei denen unmittelbar am Hochspannungsmast oberhalb der Hochspannungsisolatoren auf den Masttraversen Überdachungen vorgesehen werden, die zum Fernhalten von Vogeldreck von den Hochspannungsisolatoren ausgebildet sind. Auch wenn über entsprechende Überdachungen die Verschmutzung der Hochspannungsisolatoren deutlich reduziert werden kann, weisen die Überdachungen gemäß dem Stand der Technik einige Nachteile auf. So sind die Kosten für die Beschaffung und die Montage der Überdachungen erheblich, die Maststatik insbesondere bei Eis, Schnee und Starkwind wird negativ beeinflusst und Wartungsarbeiten an den Masttraversen und den Hochspannungsisolatoren werden erschwert.

Der Erfindung liegt daher die Aufgabe zugrunde, eine Vorrichtung zur wirksamen Reduzierung von Erdschlüssen und Erdkurzschlüssen an überirdischen Hochspannungsleitungen aufgrund von Vogeldreck zu schaffen, bei der die aus dem Stand der Technik bekannten Nachteile nicht mehr oder nur noch in vermindertem Umfang auftreten.

Gelöst wird diese Aufgabe durch eine Verschmutzungsschutzvorrichtung gemäß dem Hauptanspruch sowie eine Anordnung aus Verschmutzungsschutzvorrichtung und Hochspannungsisolator gemäß dem Anspruch 15. Vorteilhafte Weiterbildungen sind Gegenstand der abhängigen Ansprüche.

Demnach betrifft die Erfindung eine Verschmutzungsschutzvorrichtung für Hochspannungsisolatoren zur Befestigung an der Isolatorkappe eines Hochspannungsisolators mit einem Schutzschirm, der sich radial um eine Durchführungsöffnung für das Anschlusselement der Isolatorkappe erstreckt, wobei die Durchführungsöffnung auf der einen Seite des Schutzschirms von einen Befestigungsbereich zur formschlüssigen Verbindung mit der Isolatorkappe umgeben ist, und wobei auf der anderen Seite des Schutzschirms zwei Augen zum Durchstecken eines Laschenelementes und ein Laschenelement vorgesehen sind, wobei die Augen derart angeordnet sind, dass sich das Laschenelement nach Durchstecken durch die beiden Augen über die Durchführungsöffnung erstreckt.

Die Erfindung betrifft außerdem eine Anordnung umfassend einen Hochspannungsisolator mit Isolatorkappe und eine durch Formschluss mit der Isolatorkappe verbundene, erfindungsgemäße Verschmutzungsschutzvorrichtung.

Die erfindungsgemäße Verschmutzungsschutzvorrichtung bietet einen guten Schutz für durch Vögel verursachte Verschmutzung, wobei der Vogeldreck insbesondere durch den Schutzschirm vom Hochspannungsisolator ferngehalten wird.

Die Erfindung hat erkannt, dass die bei Hochspannungsisolatoren - insbesondere wenn sie als Langstabisolatoren ausgebildet sind - zur Anbindung an einen Hochspannungsmast regelmäßig vorgesehenen Isolatorkappen besonders dazu geeignet sind, um daran eine Verschmutzungsschutzvorrichtung zu befestigen. Die Befestigung kann dabei zunächst durch Formschluss zwischen dem Befestigungsbereich der Verschmutzungsschutzvorrichtung und der Isolatorkappe erreicht werden, wozu das Anschlusselement der Isolatorkappe, mit dem die Isolatorkappe und damit der Hochspannungsisolator letztendlich an einem Hochspannungsmast befestigt werden, durch die Durchführungsöffnung der Verschmutzungsschutzvorrichtung geführt wird. Anschließend wird die Verschmutzungsschutzvorrichtung mit Hilfe des Laschenelementes an der Isolatorkappe gesichert, in dem das Laschenelement nacheinander durch das eine Auge an dem Schutzschirm, das durch die Durchführungsöffnung geführte Anschlusselement der Isolatorkappe und abschließend das andere Auge an dem Schutzschirm gesteckt wird. Handelt es sich bei der Isolatorkappe bspw. um eine Gabelkappe mit zwei voneinander beabstandeten Schenkeln kann das Laschenelement zwischen den beiden Schenkeln der Gabel hindurchgesteckt werden.

Indem sich der Schutzschirm radial um die Durchführungsöffnung und den Befestigungsbereich, der mit der Isolatorkappe zusammenwirkt, erstreckt, ist sichergestellt, dass sich der Schutzschirm über den gesamten Umfang des Hochspannungsisolators erstreckt. Dabei kann der Schutzschirm den Hochspannungsisolator überdecken, also vorzugsweise derart dimensioniert sein, dass die Ausdehnung des Schutzschirm senkrecht zur Längsachse des Hochspannungsisolators in allen Richtungen gleich oder größer ist als die jeweilige größte Ausdehnung des Hochspannungsisolatorschafts bzw. der daran angeordneten Isolatorschirme.

Eine bauliche Veränderung des Hochspannungsisolators, der Isolatorkappe und/oder dem Hochspannungsmast ist für die Installation einer erfindungsgemäßen Verschmutzungsschutzvorrichtung regelmäßig nicht erforderlich, sodass weiterhin auf normierte und bereits zugelassene Bauteile zurückgegriffen werden kann. Da die erfindungsgemäße Verschmutzungsschutzvorrichtung an der Isolatorkappe und damit an der Erdpotentialseite des Hochspannungsisolators angeordnet ist, muss sie auch keine besonderen elektrischen Anforderungen erfüllen.

Es ist bevorzugt, wenn die Verschmutzungsschutzvorrichtung eine von der Durchführungsöffnung bis zur Außenkante des Schutzschirmes verlaufende radiale Montageöffnung zur seitlichen Durchführung des Anschlusselementes der Isolatorkappe der Verschmutzungsschutzvorrichtung aufweist. Durch eine entsprechende Montageöffnung lässt sich die Verschmutzungsschutzvorrichtung seitlich auf die Isolatorkappe aufschieben, sodass eine Montage der Verschmutzungsschutzvorrichtung selbst bei an einem Hochspannungsmast angebundener Isolatorkappe möglich ist.

Es ist bevorzugt, wenn zu beiden Seiten der Montageöffnung Spunde einer Schwalbenschwanzverbindung zum wahlweisen Schließen der Montageöffnung vorgesehen sind. Nach dem seitlichen Aufschieben der Verschmutzungsschutzvorrichtung auf die Isolatorkappe können die Spunde zu beiden Seiten der Montageöffnung in Überdeckung und durch eine Schließbewegung im Wesentlichen senkrecht zum Schutzschirm miteinander in Eingriff gebracht werden, um so die Schwalbenschwanzverbindung herzustellen.

Die Spunde können dabei in Richtung senkrecht zum Schutzschirm leicht angeschrägt sein, um das Schließen der Schwalbenschwanzverbindung zu erleichtern. Es ist bevorzugt, dass am Ende der Spunde jeweils eine Verriegelungsnase vorgesehen ist, die nach dem Schließvorgang der Schwalbenschwanzverschlüsse einrasten. Weiterhin ist bevorzugt, wenn am äußeren Rand des Schutzschirms alternativ oder zusätzlich ein Rastverschluss zum Sichern der Schwalbenschwanzverbindung gegen unbeabsichtigtes Öffnen vorgesehen ist. Dabei können sowohl die Verriegelungsnasen als auch der Rastverschluss insbesondere dazu ausgebildet sein, eine unbeabsichtigte relative Bewegung der Spunde zu beiden Seiten der Montageöffnung in Richtung senkrecht zum Schutzschirm - bspw. durch Windeinwirkung - zu verhindern, sodass die Schwalbenschwanzverbindung dauerhaft gesichert ist.

Das zur Sicherung der Verschmutzungsschutzvorrichtung verwendete Laschenelement weist vorzugsweise einen Kopf zur Anlage an das eine Auge im durchgesteckten Zustand und einen davon entfernten Widerhaken zum Hintergreifen des anderen Auges im durchgesteckten Zustand auf. Durch eine entsprechende Ausgestaltung wird das Laschenelement bei ordnungsgemäßen Durchstecken durch die beiden Augen am Schutzschirm unmittelbar gegen Herausrutschen gesichert.

Es ist bevorzugt wenn sich das Laschenelement um wenigstens 25%, vorzugsweise wenigstens 33% des Abstandes zwischen Kopf und Widerhaken über den Widerhaken hinaus erstreckt. Es hat sich gezeigt, dass die Handhabung der Verschmutzungsschutzvorrichtung und insbesondere das Durchstecken des Laschenelementes durch die beiden Augen des Schutzschirms deutliche vereinfacht werden kann und insbesondere ohne Werkzeugeinsatz möglich ist, wenn das Laschenelement über den für die letztendliche Sicherung der Verschmutzungsschutzvorrichtung relevanten Abschnitt zwischen Kopf und Widerhaken verlängert ist.

Vorzugsweise ist die Durchführungsöffnung auf der anderen Seite des Schutzschirms von einem umlaufenden, aus dem Schutzschirm hervorstehenden Rand umgeben. Durch einen entsprechenden Rand kann verhindert werden, dass sich ggf. auf dem Schutzschirm ansammelnde Verschmutzungen und/oder Flüssigkeiten durch die Durchführungsöffnung hindurchtreten und anschließend an dem Hochspannungsisolator entlanglaufen kann. Ist ein entsprechender Rand vorhanden, können die beiden Augen in diesen integriert sein.

Der umlaufende Rand kann an seiner Außenseite eine Führung für einen Kabelbinder aufweisen. Insbesondere wenn die Durchführungsöffnung und der umlaufende Rand zur Anlage an das Anschlusselement der Isolatorkappe ausgebildet ist, lässt sich durch das Festziehen eines am Rand geführten Kabelbinders ein Reibschluss zwischen umlaufenden Rand und Anschlusselement erreichen, mit dem die Verschmutzungsschutzvorrichtung zusätzlich an der Isolatorkappe eines Hochspannungsisolators gesichert werden kann. Insbesondere wenn die beiden Augen in den umlaufenden Rand integriert sind, ist es bevorzugt, wenn die die Führung des Kabelbinders so ausgestaltet ist, dass sich ein dort durchgeführter Kabelbinder auch über den Kopf des Laschenelementes erstreckt. Durch den Kabelbinder wird so eine zusätzliche Sicherung des Laschenelementes gegen unbeabsichtigtes Herausrutschen aus den Augen erreicht.

Es ist bevorzugt, wenn der Schutzschirm wenigstens einen wahlweise öffnenbaren, vom Rand des Schutzschirmes ausgehenden Durchbruch zur Durchführung des Befestigungsarms eines Lichtbogenschutzringes aufweist. Soll die Verschmutzungsschutzvorrichtung auf einen Hochspannungsisolator mit Lichtbogenschutzring montiert werden, kann der Durchbruch - bspw. durch Herausbrechen oder Herausschneiden des den Durchbruch verschließenden Materials - geöffnet werden, damit der Befestigungsarm des Lichtbogenschutzringes hindurchgeführt werden kann, wobei sich der Befestigungsarm in der Regel bei Auslenkung des Isolators bspw. durch Windlast relativ zu der Verschmutzungsschutzvorrichtung bewegen kann. Es ist bevorzugt, wenn die Verschmutzungsschutzvorrichtung wenigstens zwei, weiter vorzugsweise vier oder mehr entsprechender öffnenbarer Durchbrüche aufweist. Durch geeignete Anordnung der Durchbrüche kann die Verschmutzungsschutzvorrichtung für unterschiedliche Ausführungen von Hochspannungsisolatoren, Isolatorkappen und/oder Lichtbogenschutzringen geeignet sein, wobei dann der für eine konkrete Ausführung eines Hochspannungsisolators mit Lichtbogenschutzring geeignete Durchbruch geöffnet werden kann.

Es ist bevorzugt, wenn der oder die Durchbrüche auf der anderen Seite des Schutzschirmes jeweils von einem aus dem Schutzschirm hervorstehenden Rand umgeben sind. Vergleichbar zu dem oben beschriebenen die Durchführungsöffnung umlaufenden Rand, kann durch einen Rand um einen Durchbruch verhindert werden, dass Verschmutzungen und/oder Flüssigkeiten durch einen geöffneten Durchbruch gelangen und dann bspw. am Befestigungsarm des Lichtbogenschutzrings entlanglaufen und/oder unter gleichzeitiger Windeinwirkung die Isolatoroberfläche verschmutzen.

Es ist bevorzugt, wenn der Befestigungsbereich hutförmig und zum Stülpen über die Isolatorkappe ausgebildet ist. Durch eine entsprechende Formgebung lässt sich ein besonders guter Formschluss zwischen Befestigungsbereich und Isolatorkappe erreichen. Der Begriff "hutförmig" umfasst dabei sowohl Ausführungsvarianten, bei denen sich der Schutzschirm am unteren Ende des hutförmigen Bereichs in Art einer "Krempe" anschließt, als auch solche, bei denen das Dachs des hutförmigen Bereichs unmittelbar in den Schutzschirm übergeht.

Es ist bevorzugt, wenn der Schutzschirm zur Seite des Befestigungsbereichs hin geneigt ist. Damit ist der Schutzschirm im montierten Zustand der Verschmutzungsschutzvorrichtung an der Isolatorkappe eines Hochspannungsisolators regelmäßig derart geneigt, dass Regenwasser nach außen abfließt. Durch eine entsprechende Neigung kann auf dem Schutzschirm evtl. befindlicher Vogeldreck abgewaschen werden, wodurch eine natürliche Reinigung des Schutzschirms erreicht wird. Die Neigung des Schutzschirms beträgt vorzugsweise 10° bis 30°, weiter vorzugsweise 20° gegenüber der Horizontalen.

Es ist weiter bevorzugt, wenn an der Außenkante des Schutzschirmes eine Tropfkante vorgesehen ist. Dadurch kann sichergestellt werden, dass über den Schutzschirm abfließendes Regenwasser oder davon aufgeweichter Vogeldreck nicht an der Unterseite des Schutzschirmes nach Innen und in der Folge auf den Hochspannungsisolator gelangt. Die Tropfkante kann auch als Randelement ausgebildet sein, an dem der oben beschriebene Rastverschluss zum Sichern der Schwalbenschwanzverbindung angeordnet ist.

Die Verschmutzungsschutzvorrichtung kann aus Kunststoff hergestellt sein. Der Kunststoff kann dabei so gewählt werden, dass die Verschmutzungsschutzvorrichtung grundsätzlich ausreichend flexibel ist, um bspw. die Montageöffnung so zu weiten, dass die Verschmutzungsschutzvorrichtung seitlich auf einen Hochspannungsisolator aufgeschoben werden kann, oder um die Schwalbenschwanzverbindung schließen oder öffnen zu können. Andererseits sollte die Verschmutzungsschutzvorrichtung ausreichend unnachgiebig sein, um auch bei Windbelastung seine grundsätzliche Form beizubehalten und den gewünschten Verschmutzungsschutz gewährleisten zu können. Um dies zu erreichen, kann der Schutzschirm auf der Seite des Befestigungsbereiches auch radiale Versteifungsstreben aufweisen.

Zur Erläuterung der erfindungsgemäßen Anordnung wird auf die vorstehenden Ausführungen verwiesen.

Die Erfindung wird nun anhand einer vorteilhaften Ausführungsform unter Bezugnahme auf die beigefügten Zeichnungen beispielhaft beschrieben. Es zeigen:
- Figur 1:: eine schematische Darstellung eines Hochspannungsmastes umfassend erfindungsgemäße Anordnungen aus Hochspannungsisolatoren mit erfindungsgemäßen Verschmutzungsschutzvorrichtungen;
- Figur 2a, b:: schematische Detaildarstellungen einer erfindungsgemäßen Verschmutzungsschutzvorrichtung aus Figur 1; und
- Figur 3a, b:: schematische Detaildarstellungen einer Anordnung aus der Verschmutzungsschutzvorrichtung gemäß Figur 2a, b und einem Hochspannungsisolator gemäß Figur 1.

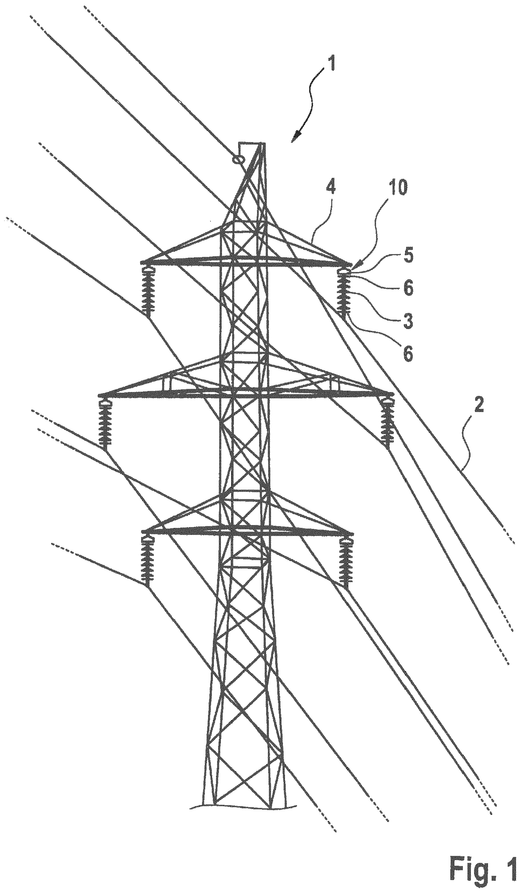

In Figur 1 ist ein Hochspannungsmast 1 mit daran aufgehängten Hochspannungsleitungen 2 dargestellt. Die Hochspannungsleitungen 2 sind über Hochspannungsisolatoren 3 an den Traversen 4 befestigt, welche die Hochspannungsleitungen 2 elektrisch von dem Hochspannungsmast 1 und damit dem Erdpotential trennen. Zur Befestigung der Hochspannungsisolatoren 3 an den Traversen 4 weisen diese Isolatorkappen 5 auf.

An den Hochspannungsisolatoren 3 ist am oberen und unteren Ende jeweils ein Lichtbogen-Schutzring 6 vorgesehen, zwischen denen ein evtl. entstehender Lichtbogen über den Hochspannungsisolator 3 hinweggeführt wird, um den Hochspannungsisolator 3 selbst nicht zu beschädigen.

Am oberen Ende jedes Hochspannungsisolators 3 ist weiterhin eine erfindungsgemäße Verschmutzungsschutzvorrichtung 10 vorgesehen.

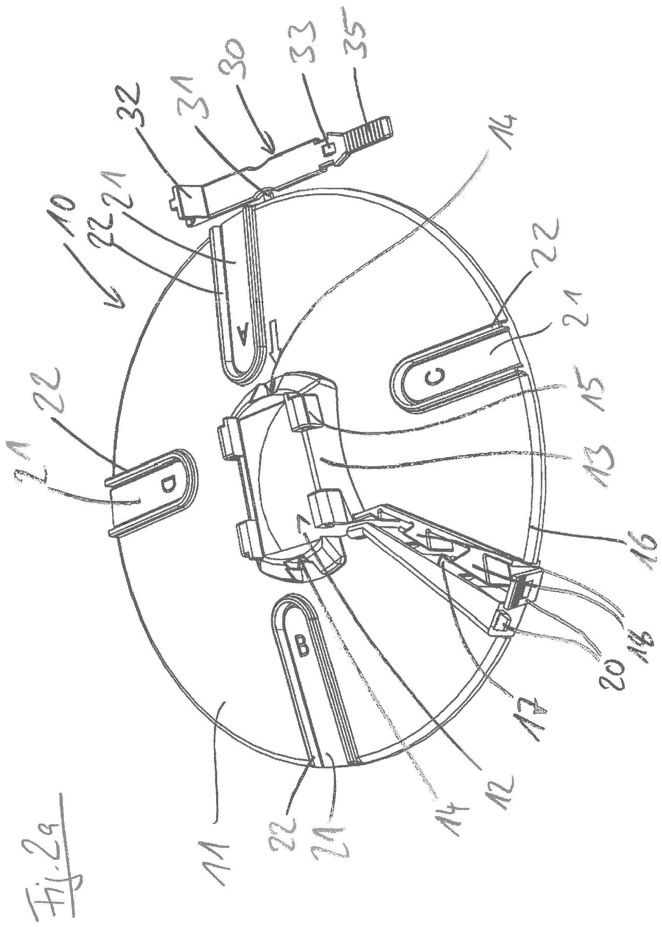

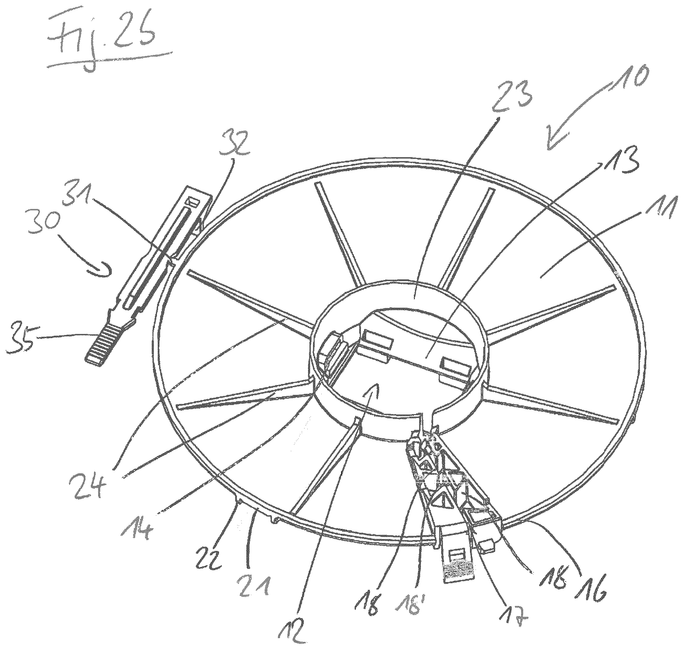

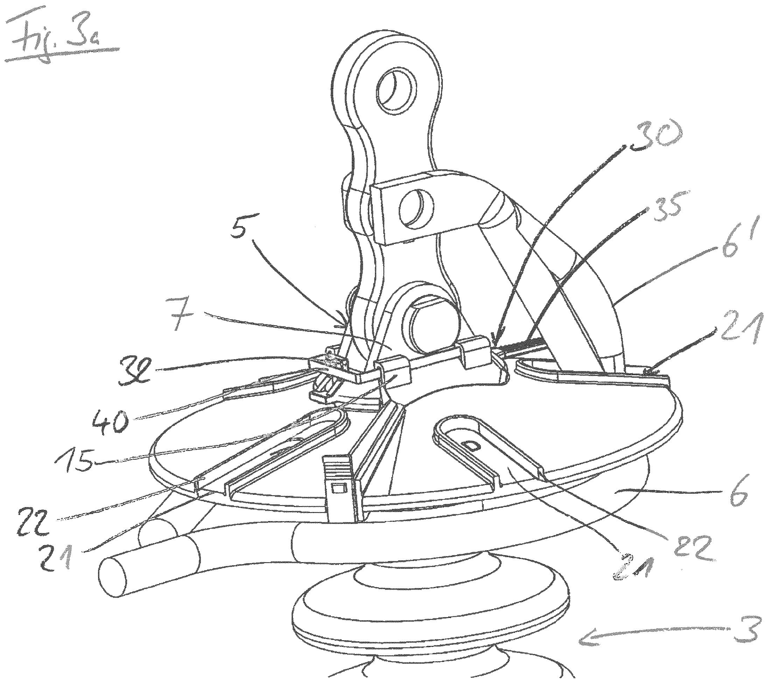

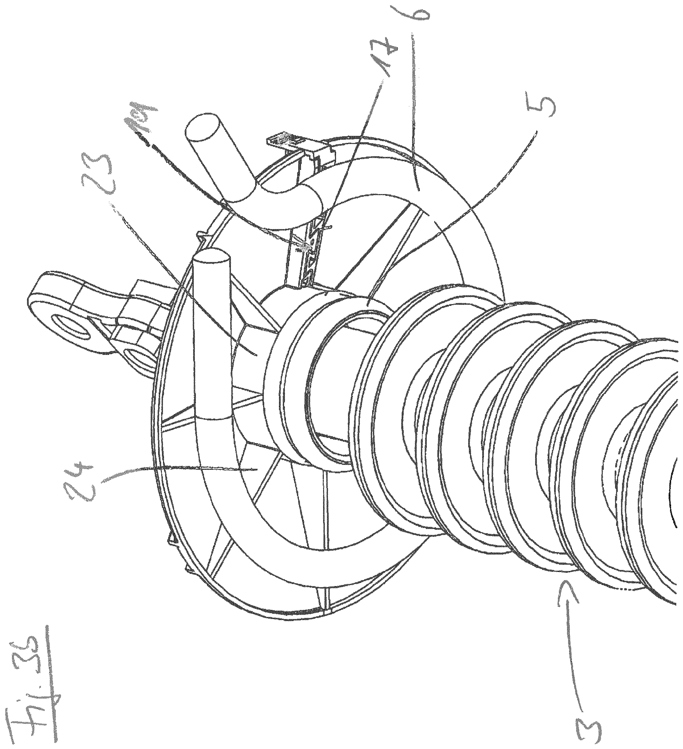

In Figur 2a, b ist die in Figur 1 verwendete Verschmutzungsschutzvorrichtung 10 im unmontierten Zustand dargestellt, während Figur 3a, b die Verschmutzungsschutzvorrichtung 10 im an einem Hochspannungsisolator 3 montierten Zustand zeigt, wobei der Hochspannungsisolator 3 einen Lichtbogenschutzring aufweist. Die Verschmutzungsschutzvorrichtung 10 ist einstückig aus Kunststoff hergestellt.

Die Verschmutzungsschutzvorrichtung 10 weist einen kreisrunden Schutzschirm 11 auf, in dessen Mitte eine Durchführungsöffnung 12 für das Anschlusselement 7 der Isolatorkappe 5 vorgesehen ist. Auf der Oberseite des Schutzschirms 11 ist die Durchführungsöffnung 12 von einem umlaufenden Rand 13 umgeben, wobei Durchführungsöffnung 12 und umlaufender Rand 13 so ausgebildet sind, dass sie im montierten Zustand der Verschmutzungsschutzvorrichtung 10 an dem Anschlusselement 7 der Isolatorkappe 5 anliegen (vgl. Figur 3a, b).

Im Rand 13 ist auf zwei gegenüberliegenden Seiten der Durchführungsöffnung 12 jeweils ein Auge 14 zum Durchstecken eines Laschenelementes 30 vorgesehen.

Das Laschenelement 30 ist im Herstellungszustand über eine Materiabrücke 31 mit der übrigen Verschmutzungsschutzvorrichtung 10 verbunden, wobei die Materialbrücke 31 für die Montage der Verschmutzungsschutzvorrichtung 10 werkzeugfrei gelöst werden kann. Das Laschenelement 30 ist langgestreckt und weist einen Kopf 32 sowie einen entfernt davon angeordneten Widerhaken 33 auf. Der Abstand zwischen Kopf 32 und Widerhaken 33 entspricht dabei im Wesentlichen dem Abstand zwischen den beiden Augen 14 am Schutzschirm 11. Ausgehend vom Kopf 32 erstreckt sich das Laschenelement 30 noch mit einem Griffabschnitt 35 um ca. 25% des genannten Abstandes über den Widerhaken 33 hinaus.

Befindet sich die Verschmutzungsschutzvorrichtung 10 auf einer Isolatorkappe 3, sodass deren Anschlusselement 7 durch die Durchführungsöffnung 12 ragt, wird das zuvor von dem Schutzschirm 11 separierte Laschenelement 30 durch das eine Auge 14 eingesteckt, anschließend durch das Anschlusselement 7 geführt und abschließend durch das andere Auge 14 hindurchgesteckt. Anschließend kann das Laschenelement 30 an dem Griffabschnitt 35 gezogen werden, bis der Widerhaken 33 einrastet. Das Laschenelement 30 liegt dann mit seinem Kopf 32 an dem einen Auge 14 und mit seinem Widerhaken 33 an dem anderen Auge 14 an und ist durch den Widerhaken 33 bereits grundsätzlich in dieser Position gesichert.

Eine zusätzliche Sicherung wird durch einen Kabelbilder 40 erreicht, der durch Führungen 15 am umlaufenden Rand 13 derart geführt ist, dass er sich über den Kopf 32 des Laschenelementes 30 erstreckt und diesen somit in seiner Position sichert. Wird der Kabelbilder 40 ausreichend festgezogen, wird aufgrund der daraus resultierenden elastischen Verformung des umlaufenden Randes 13 weiterhin ein Reibschluss zwischen umlaufenden Rand 13 und dem Anschlusselement 7 hergestellt, mit dem die Verschmutzungsschutzvorrichtung 10 insgesamt gegenüber der Isolatorkappe weiter gesichert wird.

Um die Verschmutzungsschutzvorrichtung 10 auch auf einen bereits installierten Hochspannungsisolator 3 montieren zu können, weist der Schutzschirm 11 eine von der Durchführungsöffnung 12 bis zur Außenkante 16 des Schutzschirmes 11 verlaufende radiale Montageöffnung 17 zur seitlichen Durchführung des Anschlusselementes 7 der Isolatorkappe 5 auf. Zu beiden Seiten der Montageöffnung 17 sind dabei Spunde 18 einer Schwalbenschwanzverbindung 19 zum wahlweisen Schließen der Montageöffnung 17 vorgesehen, wie dies in Figur 3a, b gezeigt ist. Um die Schwalbenschwanzverbindung 19 im geschlossenen Zustand zu sichern, sind am Ende eines Teils der Spunde je eine Verriegelungsnase 18' und an der Außenkante 16 des Schutzschirmes 11 ein Rastverschluss 20 vorgesehen, mit dem ein unbeabsichtigtes Lösen der Schwalbenschwanzverbindung 19, bspw. aufgrund von Windeinwirkung, wirksam vermieden werden kann.

An dem Schutzschirm 11 sind ausgehend von dessen Außenkante 16 vier Durchbrüche 21 angelegt, die wahlweise geöffnet werden können, in dem das die Durchbrüche 21 verdeckende Material entfernt wird. Dazu ist entlang der Außenkante jedes Durchbruchs 21 eine Vertiefung vorgesehen, an der das fragliche Material einfach herausgeschnitten werden kann. Die Durchbrüche 21 sind so angeordnet, dass sie jeweils zur Durchführungen des Befestigungsarmes 6' eines Lichtbogenschutzrings 6 in einer bestimmten Konfigurationen genutzt werden können. Abhängig von der tatsächlichen Konfiguration kann der geeignete Durchbruch 21 geöffnet werden.

Die Durchbrüche 21 sind jeweils auf der Oberseite des Schutzschirms 11 von einem Rand 22 umgeben, mit dem auf dem Schutzschirm 11 auftreffende Flüssigkeiten und Verschmutzung von einem geöffneten Durchbruch 21 abgehalten werden.

Auf der Unterseite des Schutzschirms 11 ist die Durchführungsöffnung 12 von einen hutförmig ausgestalteten Befestigungsbereich 23 umgeben, der formschlüssig mit der Isolatorkappe 5 eines Hochspannungsisolators 3 zusammenwirken kann. Weiterhin sind auf der Unterseite des Schutzschirms 11 radiale Versteifungsstreben 24 vorgesehen, welche der Verschmutzungsschutzvorrichtung 10 trotz der für die Montage erforderlichen Elastizität ausreichend Steifigkeit verleihen, damit sich die Verschmutzungsschutzvorrichtung 10 auch bei Windbelastung nicht so stark verformt, dass sie keine Wirkung mehr entfaltet.

Der Schutzschirm 11 ist insgesamt so zur Außenkante 16 hin geneigt, dass bei ordnungsgemäßer Montage darauf auftreffender Regen zur Außenkante 16 hin abfließt. Die Außenkante 16 ist dabei als Tropfkante ausgebildet.

## Patentansprüche

1. Verschmutzungsschutzvorrichtung (10) für Hochspannungsisolatoren (3) zur Befestigung an der Isolatorkappe (5) eines Hochspannungsisolators (3) mit einem Schutzschirm (11), der sich radial um eine Durchführungsöffnung (12) für das Anschlusselement (7) der Isolatorkappe (5) erstreckt, wobei die Durchführungsöffnung (12) auf der einen Seite des Schutzschirms (11) von einen Befestigungsbereich (23) zur formschlüssigen Verbindung mit der Isolatorkappe (5) umgeben ist,
**dadurch gekennzeichnet, dass**
auf der anderen Seite des Schutzschirms (11) zwei Augen (14) zum Durchstecken eines Laschenelementes (30) und ein Laschenelement (30) vorgesehen sind, wobei die Augen (14) derart angeordnet sind, dass sich das Laschenelement (30) nach Durchstecken durch die beiden (14) Augen über die Durchführungsöffnung (12) erstreckt.

2. Verschmutzungsschutzvorrichtung nach Anspruch 1,
**dadurch gekennzeichnet, dass**
eine von der Durchführungsöffnung (12) bis zu Außenkante (16) des Schutzschirmes (11) verlaufende radiale Montageöffnung (17) zur seitlichen Durchführung des Anschlusselementes (7) der Isolatorkappe (5) vorgesehen ist.

3. Verschmutzungsschutzvorrichtung nach Anspruch 1,
**dadurch gekennzeichnet, dass**
zu beiden Seiten der Montageöffnung (17) Spunde (18) einer Schwalbenschwanzverbindung (19) zum wahlweise Schließen der Montageöffnung (17) vorgesehen sind, wobei vorzugsweise wenigstens ein Teil der Spunde (18) Verriegelungsnasen (18') zum Sichern der Schwalbenschwanzverbindung (19) in geschlossener Stellung aufweisen.

4. Verschmutzungsschutzvorrichtung nach Anspruch 1,
**dadurch gekennzeichnet, dass**
am äußeren Rand (16) des Schutzschirms (12) ein Rastverschluss (20) zum Sichern der Schwalbenschwanzverbindung (19) gegen unbeabsichtigtes Öffnen vorgesehen ist.

5. Verschmutzungsschutzvorrichtung nach Anspruch 1,
**dadurch gekennzeichnet, dass**
das Laschenelement (30) einen Kopf (32) zur Anlage an das eine Auge (14) im durchgesteckten Zustand und einen davon entfernten Widerhaken (33) zum Hintergreifen des anderen Auges (14) im durchgesteckten Zustand aufweist.

6. Verschmutzungsschutzvorrichtung nach Anspruch 1,
**dadurch gekennzeichnet, dass**
sich das Laschenelement (30) um wenigstens 25%, vorzugsweise wenigstens 33% des Abstandes zwischen Kopf (32) und Widerhaken (33) über den Widerhaken (33) hinaus erstreckt.

7. Verschmutzungsschutzvorrichtung nach Anspruch 1,
**dadurch gekennzeichnet, dass**
die Durchführungsöffnung (12) auf der anderen Seite des Schutzschirms (11) von einem umlaufenden, aus dem Schutzschirm (11) hervorstehenden Rand (13) umgegeben ist, in den vorzugsweise die beiden Augen (14) integriert sind.

8. Verschmutzungsschutzvorrichtung nach Anspruch 1,
**dadurch gekennzeichnet, dass**
der umlaufende Rand (14) an seiner Außenseite eine Führung (15) für einen Kabelbinder (40) aufweist, wobei die Führung (15) vorzugsweise derart ausgestaltet ist, dass ein dort durchgeführter Kabelbinder (40) auch über den Kopf (32) des durchgesteckten Laschenelementes (30) erstreckt.

9. Verschmutzungsschutzvorrichtung nach Anspruch 1,
**dadurch gekennzeichnet, dass**
der Schutzschirm (11) wenigstens einen, vorzugsweise wenigstens zwei, weiter vorzugsweise vier oder mehr wahlweise öffnenbare, vom Rand (16) des Schutzschirmes (11) ausgehende Durchbrüche (21) zur Durchführung des Befestigungsarms (6') eines Lichtbogenschutzringes (6) aufweist.

10. Verschmutzungsschutzvorrichtung nach Anspruch 1,
**dadurch gekennzeichnet, dass**
der oder die Durchbrüche (21) auf der anderen Seite des Schutzschirmes (11) jeweils von einem aus dem Schutzschirm (11) hervorstehenden Rand (22) umgeben ist.

11. Verschmutzungsschutzvorrichtung nach Anspruch 1,
**dadurch gekennzeichnet, dass**
der Befestigungsbereich (23) hutförmig ausgestaltet ist.

12. Verschmutzungsschutzvorrichtung nach Anspruch 1,
**dadurch gekennzeichnet, dass**
der Schutzschirm (11) zur Seite des Befestigungsbereichs (23) hin geneigt ist.

13. Vorrichtung nach einem der vorhergehenden Ansprüche,
**dadurch gekennzeichnet, dass**
an der Außenkante (16) des Schutzschirmes (11) eine Tropfkante vorgesehen ist.

14. Verschmutzungsschutzvorrichtung nach Anspruch 1,
**dadurch gekennzeichnet, dass**
der Schutzschirm (11) auf der Seite des Befestigungsbereiches (23) radiale Versteifungsstreben (24) aufweist.

15. Anordnung umfassend einen Hochspannungsisolator (3) mit Isolatorkappe (5) und eine an der Isolatorkappe (5) angeordnete Verschmutzungsschutzvorrichtung (10), wobei die Verschmutzungsschutzvorrichtung (10) nach einem der vorhergehenden Ansprüche ausgebildet ist und durch Formschluss mit der Isolatorkappe (5) verbunden ist, wobei die Isolatorkappe (5) vorzugsweise eine Gabelkappe ist und/oder der Hochspannungsisolator (3) einen Lichtbogen-Schutzring (6) im Bereich der Isolatorkappe (5) aufweist.
